# EUROPEAN PATENT APPLICATION

(11) **EP 4 131 569 A1**
(43) Date of publication of application: **08.02.2023**
(21) Application number: 21775978.6
(22) Date of filing: 10.03.2021
(51) Int. Cl.: H01M 10/46, H02J 7/00, G01R 31/68, H01R 13/44, H01M 50/543, H01M 50/572

(54) **PLUG-IN DEVICE AND PLUG-IN SYSTEM**

(30) Priority: 27.03.2020 JP 2020058759; 20.01.2021 JP 2021007367
(71) Applicant: Panasonic Intellectual Property Management Co., Ltd., Osaka-shi, Osaka 540-6207 (JP)
(72) Inventor: TOYA, Shoichi, Osaka-shi, Osaka 540-6207 (JP); ANDO, Kiyoshi, Osaka-shi, Osaka 540-6207 (JP); TOYONAGA, Tomohiko, Osaka-shi, Osaka 540-6207 (JP); KOJIMA, Shinji, Osaka-shi, Osaka 540-6207 (JP)
(74) Representative: Appelt, Christian W.
(86) International application number: PCT/JP2021/009435
(87) International publication number: WO 2021/193049

(57) **Abstract**

An insertion device can be connected to a reception-side device by insertion, and a first insertion terminal 210a to a fifth insertion terminal 210e can be inserted into a plurality of insertion ports provided in the reception-side device on a one-to-one basis. The first insertion terminal 210a to the fifth insertion terminal 210e include a detection terminal, a positive electrode terminal, a negative electrode terminal, a first communication terminal, and a second communication terminal. The detection terminal is disposed between the positive electrode terminal and the negative electrode terminal. The second communication terminal is disposed between the detection terminal and the negative electrode terminal. A size of the detection terminal is smaller than a size of the second communication terminal.

## Description

### [TECHNICAL FIELD]

The present disclosure relates to an insertion device and an insertion system, and more particularly to an insertable insertion device and an insertion system.

### [BACKGROUND ART]

A storage battery pack has a connector, and the connector is connected to a charging/discharging device to charge or discharge the storage battery pack. The connector includes a plurality of terminals, for example, a positive electrode terminal, a negative electrode terminal, an information transmission terminal, an information reception terminal, a signal ground terminal (signal ground (SG)), and a protective ground terminal (frame ground (FG)) (for example, see Patent Literature 1).

### [Citation List]

### [Patent Literature]

[Patent Literature 1] JP2014-221002A

### [SUMMARY OF INVENTION]

### [TECHNICAL PROBLEM]

The risk increases when a short circuit occurs between the terminals or a spark occurs at the terminals.

The present disclosure has been made in view of such a situation, and an object thereof is to provide technology for improving safety in terminals.

### [SOLUTION TO PROBLEM]

In order to solve the above problem, an insertion device according to one aspect of the present disclosure is an insertion device that can be connected to a reception-side device by insertion, and includes a plurality of insertion terminals that can be inserted into a plurality of insertion ports provided in the reception-side device on a one-to-one basis, and a main body that supports the plurality of insertion terminals. The plurality of insertion terminals include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. The detection terminal is disposed between the positive electrode terminal and the negative electrode terminal, the communication terminal is disposed between the detection terminal and the negative electrode terminal, and a size of the detection terminal is smaller than a size of the communication terminal.

Another aspect of the present disclosure is an insertion device. This device is an insertion device that can be connected to a reception-side device by insertion, and includes a plurality of insertion terminals that can be inserted into a plurality of insertion ports provided in the reception-side device on a one-to-one basis, and a main body that supports the plurality of insertion terminals. The plurality of insertion terminals include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. The detection terminal is disposed between the positive electrode terminal and the negative electrode terminal, the communication terminal is disposed between the detection terminal and the negative electrode terminal, and a width of the detection terminal is larger than a width of the negative electrode terminal.

Still another aspect of the present disclosure is also an insertion device. This device is an insertion device that can be connected to a reception-side device by insertion, and includes a plurality of insertion terminals that can be inserted into a plurality of insertion ports provided in the reception-side device on a one-to-one basis, and a main body that supports the plurality of insertion terminals. The plurality of insertion terminals include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. A height of the detection terminal is lower than a height of the positive electrode terminal, a height of the negative electrode terminal, and a height of the communication terminal.

A further aspect of the present disclosure is an insertion system. The insertion system includes a reception-side device including a plurality of insertion ports, and an insertion device including a plurality of insertion terminals that can be inserted into the plurality of insertion ports of the reception-side device on a one-to-one basis. The plurality of insertion terminals include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. The plurality of insertion ports include a detection terminal insertion port into which the detection terminal is inserted, a positive electrode terminal insertion port into which the positive electrode terminal is inserted, a negative electrode terminal insertion port into which the negative electrode terminal is inserted, and a communication terminal insertion port into which the communication terminal is inserted. The reception-side device includes a detection terminal contact portion that can come into contact with the detection terminal inserted into the detection terminal insertion port, a positive electrode terminal contact portion that can come into contact with the positive electrode terminal inserted into the positive electrode terminal insertion port, a negative electrode terminal contact portion that can come into contact with the negative electrode terminal inserted into the negative electrode terminal insertion port, and a communication terminal contact portion that can come into contact with the communication terminal inserted into the communication terminal insertion port. A distance between the detection terminal insertion port and the detection terminal contact portion is longer than a distance between the positive electrode terminal insertion port and the positive electrode terminal contact portion, a distance between the negative electrode terminal insertion port and the negative electrode terminal contact portion, and a distance between the communication terminal insertion port and the communication terminal contact portion.

### [ADVANTAGEOUS EFFECTS OF INVENTION]

According to the present disclosure, safety in terminals can be improved.

### [BRIEF DESCRIPTION OF DRAWINGS]

Figs. 1A-1B are diagrams illustrating a structure of a charging/discharging system according to a first embodiment.
Figs. 2A-2C are diagrams illustrating a structure of a part of the charging/discharging system of Figs. 1A-1B.
Figs. 3A-3D are diagrams illustrating an arrangement of insertion terminals.
Figs. 4A-4D are diagrams illustrating an arrangement of insertion terminals according to a second embodiment.
Figs. 5A-5C are diagrams illustrating an arrangement of insertion terminals according to a third embodiment.
Figs. 6A-6B are diagrams illustrating a structure of a storage battery pack according to a fourth embodiment.
Figs. 7A-7C are diagrams illustrating a structure of a charging/discharging device according to the fourth embodiment.
Figs. 8A-8C are diagrams illustrating a structure of another charging/discharging system according to the fourth embodiment.
Figs. 9A-9C are diagrams illustrating a structure of still another charging/discharging system according to the fourth embodiment.
Fig. 10 is a diagram illustrating a structure of a further charging/discharging device according to the fourth embodiment.

### [DESCRIPTION OF EMBODIMENTS]

### First Embodiment

Before specifically describing embodiments of the present disclosure, an outline of the embodiments will be described. The present embodiment relates to a charging/discharging system that enables charging/discharging of a storage battery pack by connecting the storage battery pack to a charging/discharging device. The charging/discharging device is provided with a plurality of insertion terminals, and the storage battery pack is provided with a plurality of insertion ports, so that the storage battery pack is connected to the charging/discharging device by inserting the insertion terminals into the insertion ports on a one-to-one basis. The plurality of insertion terminals include, for example, a detection terminal for detecting connection between the storage battery pack and the charging/discharging device, a positive electrode terminal and a negative electrode terminal capable of transmitting power between the storage battery pack and the charging/discharging device, and a first communication terminal and a second communication terminal capable of transmitting data between the storage battery pack and the charging/discharging device.

A voltage is applied to the detection terminal, and when the detection terminal is inserted into the insertion port and connected to the charging/discharging device, the detection terminal is connected to a ground of the charging/discharging device and a current flows. The connection between the storage battery pack and the charging/discharging device is detected by the detection of the current. Further, when the connection between the storage battery pack and the charging/discharging device is detected, power is transmitted at the positive electrode terminal and the negative electrode terminal, and data is transmitted at the first communication terminal and the second communication terminal. Hitherto, a size of each insertion terminal is uniform, and the detection terminal and the negative electrode terminal are disposed adjacent to each other. When a good conductor such as a metal foreign substance falls into the charging/discharging device and the good conductor comes into contact with the detection terminal and the negative electrode terminal, a short circuit occurs in the charging/discharging device.

In order to suppress the occurrence of the short circuit, in the charging/discharging device according to the present embodiment, the detection terminal and the negative electrode terminal are not adjacent to each other, and for example, the second communication terminal is disposed between the detection terminal and the negative electrode terminal. In addition, a size of the detection terminal is smaller than a size of the second communication terminal. Here, the size includes a width and a height of the insertion terminal. By the arrangement and the size of the insertion terminal described above, it is difficult for the good conductor to come into contact with the detection terminal and the negative electrode terminal even if the good conductor falls into the charging/discharging device.

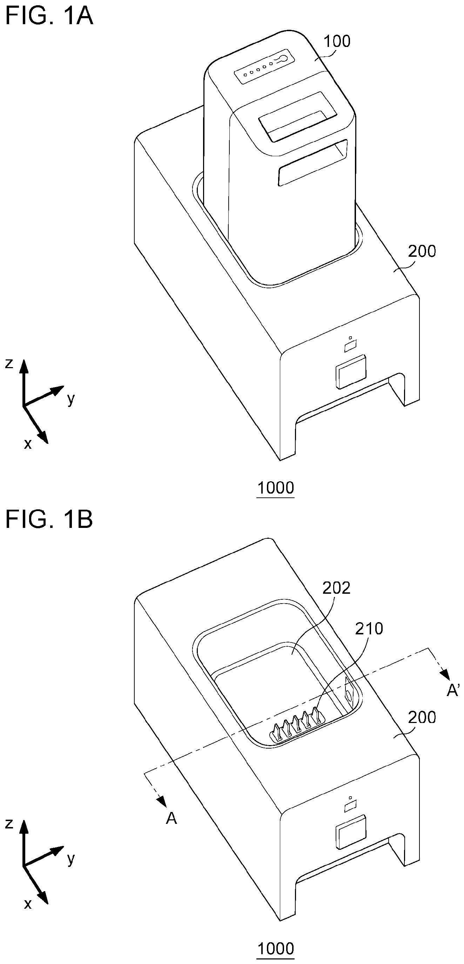

Figs. 1A-1B illustrate a structure of a charging/discharging system 1000. As illustrated in Figs. 1A-1B, an orthogonal coordinate system including an x axis, a y axis, and a z axis is defined. The x axis and the y axis are orthogonal to each other in a horizontal plane. The z axis is perpendicular to the x axis and the y axis and extends in a height (perpendicular) direction. In addition, a positive direction of each of the x axis, the y axis, and the z axis is defined as a direction of an arrow in Figs. 1A-1B, and a negative direction is defined as a direction opposite to the arrow. In addition, the positive direction side of the x axis may be referred to as the "front side", the negative direction side of the x axis may be referred to as the "rear side", the positive direction side of the y axis may be referred to as the "right side", the negative direction side of the y axis may be referred to as the "left side", the positive direction side of the z axis may be referred to as the "upper side", and the negative direction side of the z axis may be referred to as the "lower side". Therefore, the z axis is an axis extending in an up-down direction, the x axis is an axis extending in a front-rear direction, and the y axis is an axis extending in a left-right direction.

Fig. 1A is a perspective view illustrating a structure of the charging/discharging system 1000. A storage battery pack 100 has a box shape long in the up-down direction, and a charging/discharging device 200 has a box shape long in the front-rear direction. The storage battery pack 100 is inserted into a top surface of the charging/discharging device 200, so that the storage battery pack 100 is connected to the charging/discharging device 200. The storage battery pack 100 internally includes a secondary battery such as a lithium ion secondary battery, and is connected to the charging/discharging device 200 to charge and discharge the secondary battery.

Fig. 1B is a perspective view illustrating a structure of the charging/discharging device 200 when the storage battery pack 100 is removed from a state of Fig. 1A. A recess having a shape corresponding to the shape of the storage battery pack 100 is provided on the top surface of the charging/discharging device 200, and a support surface 202 extending on an x-y plane is disposed below the recess. A plurality of insertion terminals 210 each having a plate shape and protruding upward are arranged on the support surface 202 in the left-right direction.

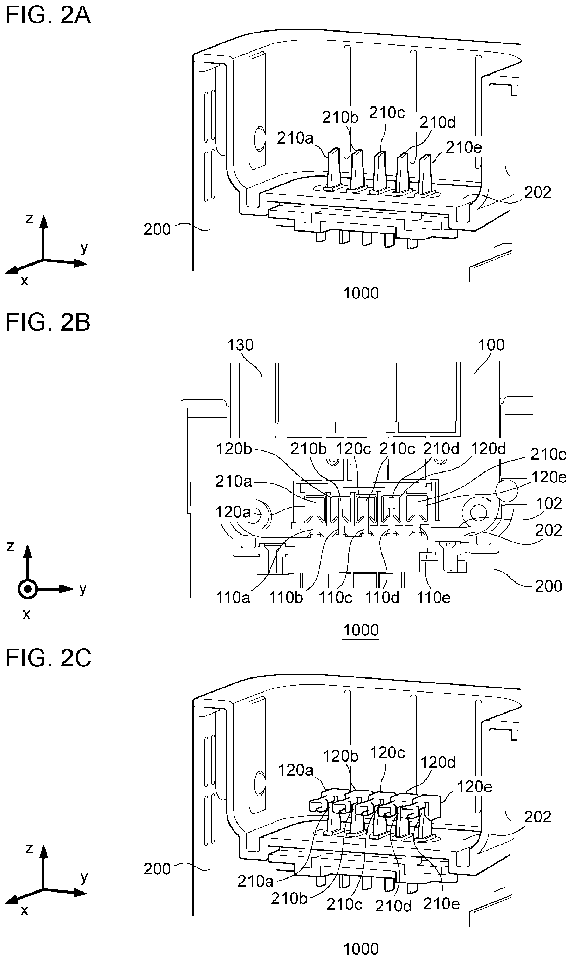

Figs. 2A-2C illustrate a structure of a part of the charging/discharging system 1000. Fig. 2A is a perspective view of the charging/discharging device 200 taken along the line A-A' of Fig. 1B. On the support surface 202 of the charging/discharging device 200, a first insertion terminal 210a, a second insertion terminal 210b, a third insertion terminal 210c, a fourth insertion terminal 210d, and a fifth insertion terminal 210e are arranged from the left side to the right side. Each of the first insertion terminal 210a, the second insertion terminal 210b, the third insertion terminal 210c, the fourth insertion terminal 210d, and the fifth insertion terminal 210e is a plate-shaped metal terminal having a surface extending on a z-x surface. The first insertion terminal 210a, the second insertion terminal 210b, the third insertion terminal 210c, the fourth insertion terminal 210d, and the fifth insertion terminal 210e are collectively referred to as the insertion terminals 210, but the number of insertion terminals 210 is not limited to "5". The support surface 202 that supports the plurality of insertion terminals 210 may be referred to as a main body.

Fig. 2B is a cross-sectional view in a state where the storage battery pack 100 is connected to the charging/discharging device 200 as illustrated in Fig. 1A. When the charging/discharging device 200 including the plurality of insertion terminals 210 is referred to as an "insertion device", the storage battery pack 100 inserted by the plurality of insertion terminals 210 is referred to as a "reception-side device". In addition, a combination of the insertion device and the reception-side device is referred to as an "insertion system". Similarly to Fig. 2A, on the support surface 202 of the charging/discharging device 200, the first insertion terminal 210a, the second insertion terminal 210b, the third insertion terminal 210c, the fourth insertion terminal 210d, and the fifth insertion terminal 210e are arranged from the left side to the right side.

A lower surface of the storage battery pack 100 is a bottom surface 102, and a first insertion port 110a, a second insertion port 110b, a third insertion port 110c, a fourth insertion port 110d, and a fifth insertion port 110e are arranged on the bottom surface 102 in the left-right direction. The first insertion port 110a, the second insertion port 110b, the third insertion port 110c, the fourth insertion port 110d, and the fifth insertion port 110e are collectively referred to as insertion ports 110, and the insertion terminals 210 can be inserted into the insertion ports 110 on a one-to-one basis. For example, the first insertion terminal 210a is inserted into the first insertion port 110a. In a state where the insertion terminal 210 is inserted into the insertion port 110, the support surface 202 supports the bottom surface 102 from below.

In the storage battery pack 100, a first contact portion 120a is provided above the first insertion port 110a. In a state where the first insertion terminal 210a is inserted into the first insertion port 110a, a distal end of the first insertion terminal 210a is connected so as to be surrounded by the first contact portion 120a from the left side and the right side. Since the first contact portion 120a is also formed of a metal, the first contact portion 120a and the first insertion terminal 210a are also electrically connected to each other.

A second contact portion 120b and the second insertion terminal 210b, a third contact portion 120c and the third insertion terminal 210c, a fourth contact portion 120d and the fourth insertion terminal 210d, and a fifth contact portion 120e and the fifth insertion terminal 210e are structured similarly to the first contact portion 120a and the first insertion terminal 210a. The first contact portion 120a, the second contact portion 120b, the third contact portion 120c, the fourth contact portion 120d, and the fifth contact portion 120e are collectively referred to as contact portions 120. Connecting the contact portions 120 and the insertion terminals 210 corresponds to connecting the storage battery pack 100 and the charging/discharging device 200. A storage battery 130 inside the storage battery pack 100 is, for example, a secondary battery such as a lithium ion secondary battery.

Fig. 2C is illustrated similarly to Fig. 2A, and is a perspective view illustrating a state in which the first contact portion 120a to the fifth contact portion 120e are connected to the charging/discharging device 200. As illustrated in the drawing, the contact portion 120 surrounds a left side surface and a right side surface of the insertion terminal 210 by elasticity of a spring.

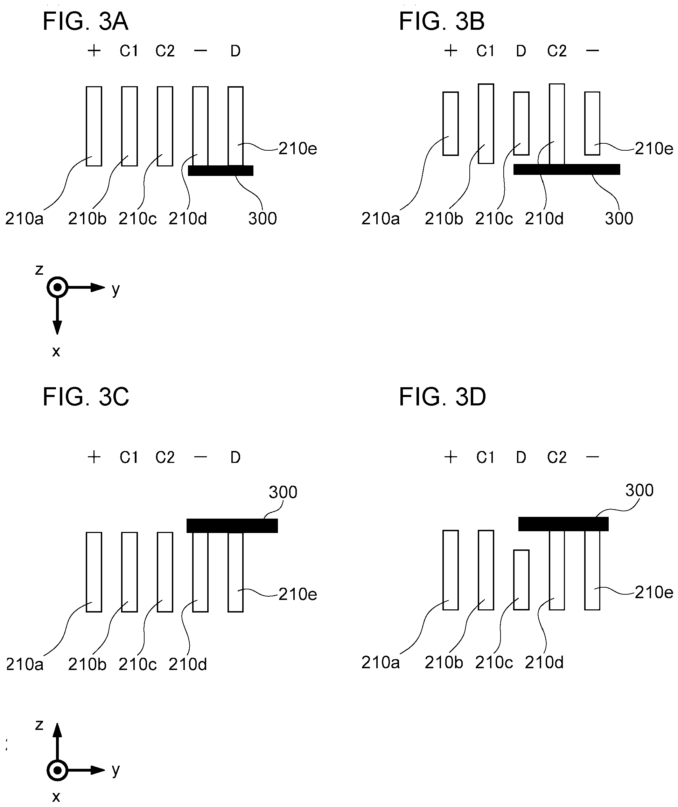

Figs. 3A-3D illustrate the arrangement of the insertion terminals 210. Figs. 3A-3B are diagrams illustrating the plurality of insertion terminals 210 as viewed from above. Fig. 3A illustrates an arrangement of the insertion terminals 210 to be compared in the present embodiment. Here, a detection terminal "D" is a terminal to which a voltage is applied to detect the connection between the charging/discharging device 200 and the storage battery pack 100. A positive electrode terminal "+" and a negative electrode terminal "-" are terminals for transmitting power after the connection between the charging/discharging device 200 and the storage battery pack 100. A first communication terminal "C1" and a second communication terminal "C2" are terminals for transmitting data after the connection between the charging/discharging device 200 and the storage battery pack 100. The first communication terminal "C1" and the second communication terminal "C2" are collectively referred to as communication terminals.

As illustrated in the drawing, the first insertion terminal 210a is used as the positive electrode terminal "+", the second insertion terminal 210b is used as the first communication terminal "C1", and the third insertion terminal 210c is used as the second communication terminal "C2". In addition, the fourth insertion terminal 210d is used as the negative electrode terminal "-", and the fifth insertion terminal 210e is used as the detection terminal "D". That is, the negative electrode terminal "-" and the detection terminal "D" are disposed adjacent to each other. The first insertion terminal 210a to the fifth insertion terminal 210e have the same width in the front-rear direction. In such an arrangement, when a good conductor 300 to be a metal foreign substance exists from the fourth insertion terminal 210d to the fifth insertion terminal 210e, the good conductor 300 comes into contact with the fourth insertion terminal 210d and the fifth insertion terminal 210e. As a result, since the negative electrode terminal "-" and the detection terminal "D" are short-circuited, the voltage of the detection terminal "D" is applied to the negative electrode terminal "-".

Fig. 3B illustrates an arrangement of the insertion terminals 210 for preventing a short circuit that occurs in Fig. 3A. The first insertion terminal 210a is used as the positive electrode terminal "+", the second insertion terminal 210b is used as the first communication terminal "C1", and the third insertion terminal 210c is used as the detection terminal "D". In addition, the fourth insertion terminal 210d is used as the second communication terminal "C2", and the fifth insertion terminal 210e is used as the negative electrode terminal "-". As such, the positive electrode terminal "+" and the negative electrode terminal "-" are disposed at both ends, the detection terminal "D" is disposed between the positive electrode terminal "+" and the negative electrode terminal "-", and the second communication terminal "C2" is disposed between the detection terminal "D" and the negative electrode terminal "-". That is, the detection terminal "D" and the negative electrode terminal "-" are not disposed adjacent to each other.

The sizes of the positive electrode terminal "+", the negative electrode terminal "-", and the detection terminal "D" are smaller than the sizes of the first communication terminal "C1" and the second communication terminal "C2". Specifically, widths of the positive electrode terminal "+", the negative electrode terminal "-", and the detection terminal "D" in the front-rear direction are smaller than widths of the first communication terminal "C1" and the second communication terminal "C2" in the front-rear direction. In particular, the positive electrode terminal "+", the negative electrode terminal "-", and the detection terminal "D" are disposed inside the first communication terminal "C1" and the second communication terminal "C2" in the front-rear direction. In such an arrangement, when the good conductor 300 exists from the third insertion terminal 210c to the fifth insertion terminal 210e, the good conductor 300 does not come into contact with at least one of the third insertion terminal 210c or the fifth insertion terminal 210e. As a result, since the negative electrode terminal "-" and the detection terminal "D" are not short-circuited, the voltage of the detection terminal "D" is not applied to the negative electrode terminal "-".

Figs. 3C-3D are diagrams illustrating the plurality of insertion terminals 210 as viewed from the side. Fig. 3C illustrates an arrangement of the insertion terminals 210 to be compared in the present embodiment. Similarly to Fig. 3A, the first insertion terminal 210a is used as the positive electrode terminal "+", the second insertion terminal 210b is used as the first communication terminal "C1", and the third insertion terminal 210c is used as the second communication terminal "C2". In addition, the fourth insertion terminal 210d is used as the negative electrode terminal "-", and the fifth insertion terminal 210e is used as the detection terminal "D". That is, the negative electrode terminal "-" and the detection terminal "D" are disposed adjacent to each other. The first insertion terminal 210a to the fifth insertion terminal 210e have the same height in a height direction. In such an arrangement, when the good conductor 300 exists so as to cover the fourth insertion terminal 210d and the fifth insertion terminal 210e, the good conductor 300 comes into contact with the fourth insertion terminal 210d and the fifth insertion terminal 210e. As a result, since the negative electrode terminal "-" and the detection terminal "D" are short-circuited, the voltage of the detection terminal "D" is applied to the negative electrode terminal "-".

Fig. 3D illustrates an arrangement of the insertion terminals 210 for preventing a short circuit that occurs in Fig. 3C. Similarly to Fig. 3B, the first insertion terminal 210a is used as the positive electrode terminal "+", the second insertion terminal 210b is used as the first communication terminal "C1", and the third insertion terminal 210c is used as the detection terminal "D". In addition, the fourth insertion terminal 210d is used as the second communication terminal "C2", and the fifth insertion terminal 210e is used as the negative electrode terminal "-".

The sizes of the positive electrode terminal "+", the negative electrode terminal "-", and the detection terminal "D" are smaller than the sizes of the first communication terminal "C1" and the second communication terminal "C2". Specifically, the height of the detection terminal "D" is lower than the heights of the positive electrode terminal "+", the negative electrode terminal "-", the first communication terminal "C1", and the second communication terminal "C2". In such an arrangement, when the good conductor 300 exists so as to cover the third insertion terminal 210c to the fifth insertion terminal 210e from above, the good conductor 300 does not come into contact with the third insertion terminal 210c. As a result, since the negative electrode terminal "-" and the detection terminal "D" are not short-circuited, the voltage of the detection terminal "D" is not applied to the negative electrode terminal "-".

According to the present embodiment, since the detection terminal is disposed between the positive electrode terminal and the negative electrode terminal, the communication terminal is disposed between the detection terminal and the negative electrode terminal, and the size of the detection terminal is smaller than the size of the communication terminal, the short circuit between the detection terminal and the negative electrode terminal is less likely to occur. In addition, since the short circuit between the detection terminal and the negative electrode terminal is less likely to occur, safety in the terminals can be improved. In addition, since the short circuit between the detection terminal and the negative electrode terminal is less likely to occur, durability of the terminals can be improved. In addition, since the width of the detection terminal is smaller than the width of the communication terminal, the short circuit between the detection terminal and the negative electrode terminal is less likely to occur. In addition, since the height of the detection terminal is lower than the height of the communication terminal, the short circuit between the detection terminal and the negative electrode terminal is less likely to occur.

An outline of one aspect of the present disclosure is as follows. An insertion device according to one aspect of the present disclosure is an insertion device connectable to a reception-side device by insertion, and includes a plurality of insertion terminals (210) that can be inserted into a plurality of insertion ports (110) provided in the reception-side device on a one-to-one basis; and a main body that supports the plurality of insertion terminals (210). The plurality of insertion terminals (210) include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. The detection terminal is disposed between the positive electrode terminal and the negative electrode terminal, the communication terminal is disposed between the detection terminal and the negative electrode terminal, and a size of the detection terminal is smaller than a size of the communication terminal.

A width of the detection terminal is smaller than a width of the communication terminal.

A height of the detection terminal is lower than a height of the communication terminal.

### Second Embodiment

Next, a second embodiment will be described. Similarly to the first embodiment, the second embodiment relates to a charging/discharging system that enables charging/discharging of a storage battery pack by connecting the storage battery pack to a charging/discharging device. The second embodiment is different from the first embodiment in an arrangement of insertion terminals. A configuration of a charging/discharging system 1000 according to the second embodiment is the same type as those in Figs. 1A-1B and Fig.2C. Here, differences from the first embodiment will be mainly described.

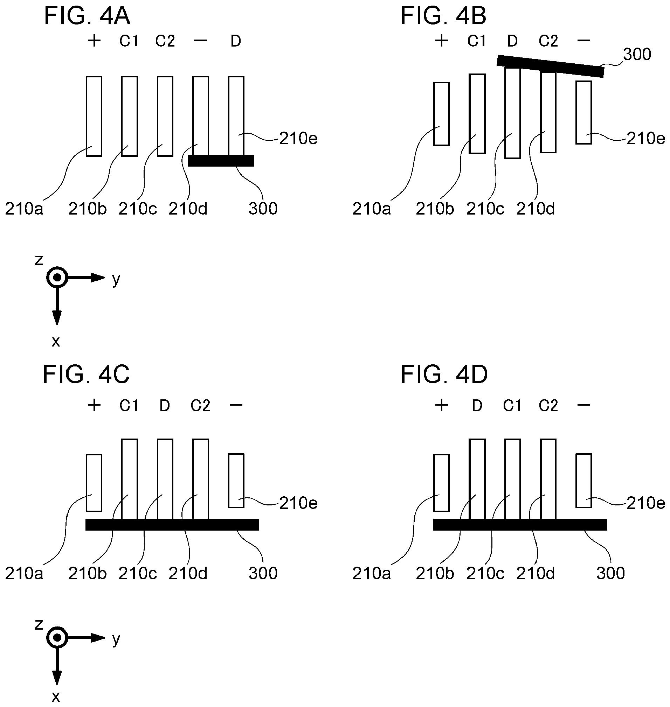

Figs. 4A-4D illustrate an arrangement of insertion terminals 210. Figs. 4A-4D are diagrams illustrating the plurality of insertion terminals 210 as viewed from above. Fig. 4A illustrates an arrangement of the insertion terminals 210 to be compared in the present embodiment, and is the same as Fig. 3A. Fig. 4B illustrates an arrangement of the insertion terminals 210 for preventing a short circuit that occurs in Fig. 4A. The first insertion terminal 210a is used as the positive electrode terminal "+", the second insertion terminal 210b is used as the first communication terminal "C1", and the third insertion terminal 210c is used as the detection terminal "D". In addition, the fourth insertion terminal 210d is used as the second communication terminal "C2", and the fifth insertion terminal 210e is used as the negative electrode terminal "-". As such, the positive electrode terminal "+" and the negative electrode terminal "-" are disposed at both ends, the detection terminal "D" is disposed between the positive electrode terminal "+" and the negative electrode terminal "-", and the second communication terminal "C2" is disposed between the detection terminal "D" and the negative electrode terminal "-". That is, the detection terminal "D" and the negative electrode terminal "-" are not disposed adjacent to each other.

A width of the detection terminal "D" in a front-rear direction is larger than widths of the positive electrode terminal "+" and the negative electrode terminal "-" in the front-rear direction, and widths of the first communication terminal "C1" and the second communication terminal "C2" in the front-rear direction are smaller than the width of the detection terminal "D" in the front-rear direction and larger than the widths of the positive electrode terminal "+" and the negative electrode terminal "-" in the front-rear direction. The first communication terminal "C1" and the second communication terminal "C2" are disposed inside the detection terminal "D" in the front-rear direction, and the positive electrode terminal "+" and the negative electrode terminal "-" are disposed inside the first communication terminal "C1" and the second communication terminal "C2" in the front-rear direction. In such an arrangement, when a good conductor 300 exists from the third insertion terminal 210c to the fifth insertion terminal 210e, the good conductor 300 does not come into contact with the third insertion terminal 210c or the fifth insertion terminal 210e. As a result, since the negative electrode terminal "-" and the detection terminal "D" are not short-circuited, the voltage of the detection terminal "D" is not applied to the negative electrode terminal "-".

In the arrangement of Fig. 4A, when the detection terminal "D" and the negative electrode terminal "-" are short-circuited, a communication failure occurs. In addition, when the positive electrode terminal "+" and the negative electrode terminal "-" are short-circuited during energization, this causes smoke and fire.

Fig. 4C illustrates an arrangement of the insertion terminals 210 for preventing occurrence of such a phenomenon in Fig. 4A. The first insertion terminal 210a is used as the positive electrode terminal "+", the second insertion terminal 210b is used as the first communication terminal "C1", and the third insertion terminal 210c is used as the detection terminal "D". In addition, the fourth insertion terminal 210d is used as the second communication terminal "C2", and the fifth insertion terminal 210e is used as the negative electrode terminal "-". As such, the positive electrode terminal "+" and the negative electrode terminal "-" are disposed at both ends, the detection terminal "D" is disposed between the positive electrode terminal "+" and the negative electrode terminal "-", and the second communication terminal "C2" is disposed between the detection terminal "D" and the negative electrode terminal "-". That is, the detection terminal "D" and the negative electrode terminal "-" are not disposed adjacent to each other. The widths of the detection terminal "D", the first communication terminal "C1", and the second communication terminal "C2" in the front-rear direction are larger than the widths of the positive electrode terminal "+" and the negative electrode terminal "-" in the front-rear direction. In particular, the detection terminal "D", the first communication terminal "C1", and the second communication terminal "C2" are disposed inside the positive electrode terminal "+" and the negative electrode terminal "-" in the front-rear direction.

Fig. 4D is a modification of Fig. 4C. The first insertion terminal 210a is used as the positive electrode terminal "+", the second insertion terminal 210b is used as the detection terminal "D", and the third insertion terminal 210c is used as the first communication terminal "C1". In addition, the fourth insertion terminal 210d is used as the second communication terminal "C2", and the fifth insertion terminal 210e is used as the negative electrode terminal "-". As such, the positive electrode terminal "+" and the negative electrode terminal "-" are disposed at both ends, the detection terminal "D" is disposed between the positive electrode terminal "+" and the negative electrode terminal "-", and the first communication terminal "C1" and the second communication terminal "C2" are disposed between the detection terminal "D" and the negative electrode terminal "-". That is, the detection terminal "D" and the negative electrode terminal "-" are not disposed adjacent to each other.

According to the present embodiment, since the detection terminal is disposed between the positive electrode terminal and the negative electrode terminal, the communication terminal is disposed between the detection terminal and the negative electrode terminal, and the width of the detection terminal is larger than the width of the negative electrode terminal, the short circuit between the detection terminal and the negative electrode terminal is less likely to occur. In addition, since the width of the communication terminal is smaller than the width of the detection terminal and larger than the width of the negative electrode terminal, the short circuit between the detection terminal and the negative electrode terminal is less likely to occur.

An outline of one aspect of the present disclosure is as follows. Another aspect of the present disclosure is also an insertion device. This device is an insertion device connectable to a reception-side device by insertion, and includes a plurality of insertion terminals (210) that can be inserted into a plurality of insertion ports (110) provided in the reception-side device on a one-to-one basis, and a main body that supports the plurality of insertion terminals (210). The plurality of insertion terminals (210) include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. The detection terminal is disposed between the positive electrode terminal and the negative electrode terminal, the communication terminal is disposed between the detection terminal and the negative electrode terminal, and a width of the detection terminal is larger than a width of the negative electrode terminal.

A width of the communication terminal is smaller than a width of the detection terminal and larger than a width of the negative electrode terminal.

### Third Embodiment

Next, a third embodiment will be described. The third embodiment relates to a charging/discharging system that enables charging/discharging of a storage battery pack by connecting the storage battery pack to a charging/discharging device, as in the past. When a positive electrode terminal and a negative electrode terminal come into contact with a contact portion in a state where a detection terminal and a communication terminal first come into contact with the contact portion, a spark may occur. The third embodiment relates to an arrangement of insertion terminals for suppressing occurrence of the spark. A configuration of a charging/discharging system 1000 according to the third embodiment is the same type as those in Figs. 1A-1B and Fig. 2C. Here, differences from the first embodiment will be mainly described.

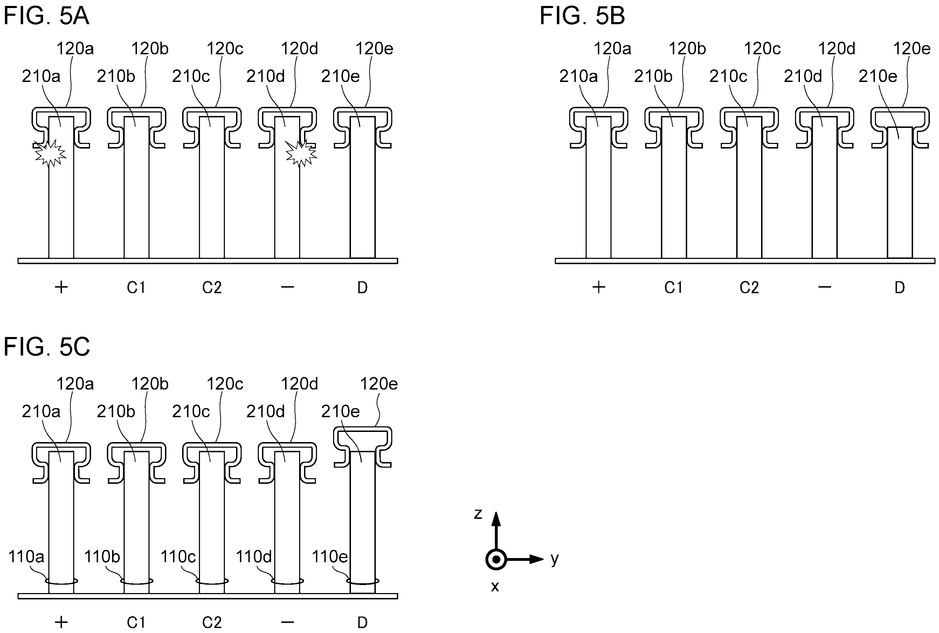

Figs. 5A-5C illustrate an arrangement of insertion terminals 210. Figs. 5A-5C are diagrams illustrating a plurality of insertion terminals 210 as viewed from the side. Fig. 5A illustrates an arrangement of the insertion terminals 210 to be compared in the present embodiment. Similarly to Fig. 3C, a first insertion terminal 210a is used as a positive electrode terminal "+", a second insertion terminal 210b is used as a first communication terminal "C1", and a third insertion terminal 210c is used as a second communication terminal "C2". In addition, the fourth insertion terminal 210d is used as the negative electrode terminal "-", and the fifth insertion terminal 210e is used as the detection terminal "D". The first insertion terminal 210a to the fifth insertion terminal 210e have the same height in a height direction. In such an arrangement, in a state where the first communication terminal "C1" comes into contact with a second contact portion 120b, the second communication terminal "C2" comes into contact with a third contact portion 120c, and the detection terminal "D" comes into contact with a fifth contact portion 120e, when the positive electrode terminal "+" comes into contact with a first contact portion 120a, and the negative electrode terminal "-" comes into contact with a fourth contact portion 120d, a spark may occur as illustrated in the drawing.

Fig. 5B illustrates an arrangement of the insertion terminals 210 for preventing the spark that occurs in Fig. 5A. Similarly to Fig. 5A, the first insertion terminal 210a is used as the positive electrode terminal "+", the second insertion terminal 210b is used as the first communication terminal "C1", and the third insertion terminal 210c is used as the second communication terminal "C2". In addition, the fourth insertion terminal 210d is used as the negative electrode terminal "-", and the fifth insertion terminal 210e is used as the detection terminal "D". On the other hand, the height of the detection terminal "D" is lower than the height of the positive electrode terminal "+", the height of the negative electrode terminal "-", the height of the first communication terminal "C1", and the height of the second communication terminal "C2". In such an arrangement, when the positive electrode terminal "+" comes into contact with the first contact portion 120a and the negative electrode terminal "-" comes into contact with the fourth contact portion 120d, the detection terminal "D" does not come into contact with the fifth contact portion 120e, so that no spark occurs.

Fig. 5C illustrates another structure for preventing the spark that occurs in Fig. 5A. The first insertion terminal 210a to the fifth insertion terminal 210e are the same as those in Fig. 5A. Therefore, the first insertion port 110a corresponds to a positive electrode terminal insertion port into which the positive electrode terminal "+" is inserted, and the first contact portion 120a corresponds to a positive electrode terminal contact portion that comes into contact with the positive electrode terminal "+" inserted into the positive electrode terminal insertion port. The second insertion port 110b corresponds to a first communication terminal insertion port into which the first communication terminal "C1" is inserted, and the second contact portion 120b corresponds to a first communication terminal contact portion that comes into contact with the first communication terminal "C1" inserted into the first communication terminal insertion port. The third insertion port 110c corresponds to a second communication terminal insertion port into which the second communication terminal "C2" is inserted, and the third contact portion 120c corresponds to a second communication terminal contact portion that comes into contact with the second communication terminal "C2" inserted into the second communication terminal insertion port.

The fourth insertion port 110d corresponds to a negative electrode terminal insertion port into which the negative electrode terminal "-" is inserted, and the fourth contact portion 120d corresponds to a negative electrode terminal contact portion that comes into contact with the negative electrode terminal "-" inserted into the negative electrode terminal insertion port. The fifth insertion port 110e corresponds to a detection terminal insertion port into which the detection terminal "D" is inserted, and the fifth contact portion 120e corresponds to a detection terminal contact portion that comes into contact with the detection terminal "D" inserted into the detection terminal insertion port.

Here, the detection terminal contact portion is disposed at a position higher than the positive electrode terminal contact portion, the negative electrode terminal contact portion, the first communication terminal contact portion, and the second communication terminal contact portion. That is, a distance between the detection terminal insertion port and the detection terminal contact portion is longer than a distance between the positive electrode terminal insertion port and the positive electrode terminal contact portion, a distance between the negative electrode terminal insertion port and the negative electrode terminal contact portion, a distance between the first communication terminal insertion port and the first communication terminal contact portion, and a distance between the second communication terminal insertion port and the second communication terminal contact portion. In such an arrangement, when the positive electrode terminal "+" comes into contact with the first contact portion 120a and the negative electrode terminal "-" comes into contact with the fourth contact portion 120d, the detection terminal "D" does not come into contact with the fifth contact portion 120e, so that no spark occurs.

According to the present embodiment, since the height of the detection terminal is lower than the height of the positive electrode terminal, the height of the negative electrode terminal, and the height of the communication terminal, the detection terminal can be connected after the positive electrode terminal, the negative electrode terminal, and the communication terminal are connected. In addition, since the detection terminal is connected after the positive electrode terminal, the negative electrode terminal, and the communication terminal are connected, the occurrence of the spark can be prevented. In addition, since the occurrence of the spark is prevented, durability of the terminals can be improved. In addition, since the distance between the detection terminal insertion port and the detection terminal contact portion is longer than the distance between the positive electrode terminal insertion port and the positive electrode terminal contact portion, the distance between the negative electrode terminal insertion port and the negative electrode terminal contact portion, and the distance between the communication terminal insertion port and the communication terminal contact portion, the detection terminal can be connected after the positive electrode terminal, the negative electrode terminal, and the communication terminal are connected.

An outline of one aspect of the present disclosure is as follows. Still another aspect of the present disclosure is also an insertion device. This device is an insertion device connectable to a reception-side device by insertion, and includes a plurality of insertion terminals (210) that can be inserted into a plurality of insertion ports (110) provided in the reception-side device on a one-to-one basis, and a main body that supports the plurality of insertion terminals (210). The plurality of insertion terminals (210) include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. A height of the detection terminal is lower than a height of the positive electrode terminal, a height of the negative electrode terminal, and a height of the communication terminal.

A further aspect of the present disclosure is an insertion system. The insertion system includes a reception-side device including a plurality of insertion ports (110), and an insertion device including a plurality of insertion terminals (210) that can be inserted into the plurality of insertion ports (110) of the reception-side device on a one-to-one basis. The plurality of insertion terminals (210) include a detection terminal to which a voltage can be applied to detect connection with the reception-side device, a positive electrode terminal and a negative electrode terminal that can transmit power after the connection with the reception-side device, and a communication terminal that can transmit data after the connection with the reception-side device. The plurality of insertion ports (110) include a detection terminal insertion port into which the detection terminal is inserted, a positive electrode terminal insertion port into which the positive electrode terminal is inserted, a negative electrode terminal insertion port into which the negative electrode terminal is inserted, and a communication terminal insertion port into which the communication terminal is inserted. The reception-side device includes a detection terminal contact portion that can come into contact with the detection terminal inserted into the detection terminal insertion port, a positive electrode terminal contact portion that can come into contact with the positive electrode terminal inserted into the positive electrode terminal insertion port, a negative electrode terminal contact portion that can come into contact with the negative electrode terminal inserted into the negative electrode terminal insertion port, and a communication terminal contact portion that can come into contact with the communication terminal inserted into the communication terminal insertion port. A distance between the detection terminal insertion port and the detection terminal contact portion is longer than a distance between the positive electrode terminal insertion port and the positive electrode terminal contact portion, a distance between the negative electrode terminal insertion port and the negative electrode terminal contact portion, and a distance between the communication terminal insertion port and the communication terminal contact portion.

### Fourth Embodiment

Next, a fourth embodiment will be described. The fourth embodiment relates to a charging/discharging system that enables charging/discharging of a storage battery pack by connecting the storage battery pack to a charging/discharging device, as in the past. A detection terminal and a communication terminal are formed of a conductive substance such as a metal. On the other hand, a bottom surface of the storage battery pack is formed of an insulating substance such as a resin. When a user tries to connect the storage battery pack to the charging/discharging device by reversing a direction of the storage battery pack, the detection terminal and the communication terminal made of the metal come into contact with the bottom surface of the resin. As a result, the bottom surface of the storage battery pack may be deformed. The fourth embodiment relates to a structure for facilitating connection of the storage battery pack while preventing the connection of the storage battery pack in a wrong direction. Here, differences from the above will be mainly described.

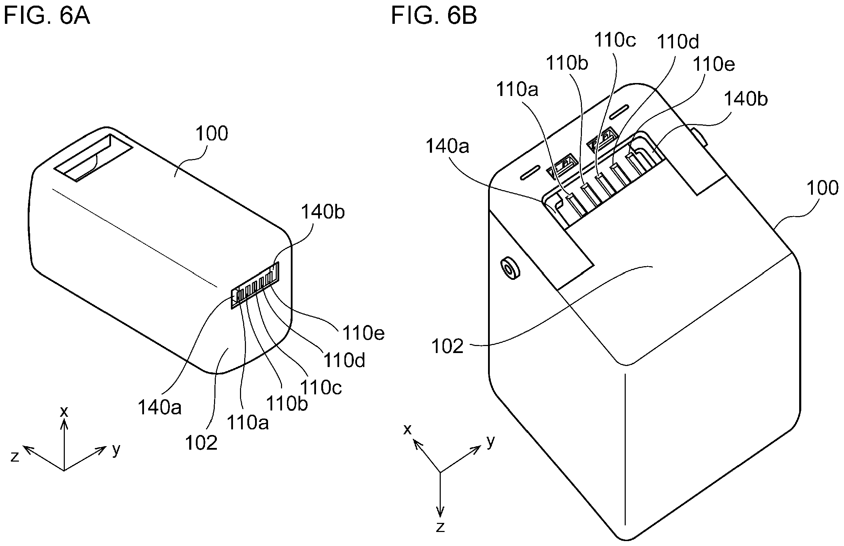

Figs. 6A-6B illustrate a structure of a storage battery pack 100. These are perspective views including a bottom surface 102 of the storage battery pack 100. As described above, the bottom surface 102 is formed of the resin. Similarly to the above, a first insertion port 110a, a second insertion port 110b, a third insertion port 110c, a fourth insertion port 110d, and a fifth insertion port 110e are arranged on the bottom surface 102 in a left-right direction. The bottom surface 102 of the storage battery pack 100 according to the present embodiment is provided with a first guide insertion port 140a and a second guide insertion port 140b collectively referred to as guide insertion ports 140. For example, the first guide insertion port 140a, the first insertion port 110a to the fifth insertion port 110e, and the second guide insertion port 140b are arranged in this order. The guide insertion ports 140 have a shape into which guide rods 240 described later can be inserted.

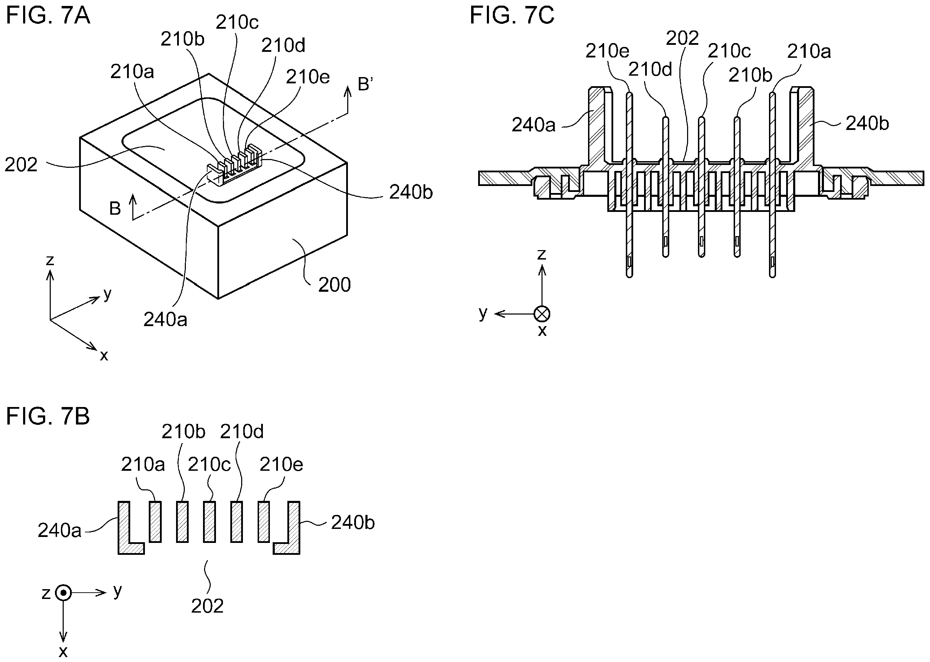

Figs. 7A-7C illustrate a structure of a charging/discharging device 200. Fig. 7A is a perspective view illustrating a structure of the charging/discharging device 200, Fig. 7B is a cross-sectional view of the charging/discharging device 200 taken along the line B-B' of Fig. 7B, and Fig. 7C is a diagram illustrating a support surface 202 of Fig. 7A as viewed from above. Similarly to Fig. 1B, a recess having a shape corresponding to the shape of the storage battery pack 100 is provided on a top surface of the charging/discharging device 200, and the support surface 202 extending on an x-y plane is disposed below the recess. On the support surface 202, a first insertion terminal 210a, a second insertion terminal 210b, a third insertion terminal 210c, a fourth insertion terminal 210d, and a fifth insertion terminal 210e are arranged from the left side to the right side. The insertion terminals 210 are formed of a metal.

The support surface 202 of the charging/discharging device 200 according to the present embodiment is provided with a first guide rod 240a and a second guide rod 240b collectively referred to as guide rods 240. For example, the first guide rod 240a, the first insertion terminal 210a to the fifth insertion terminal 210e, and the second guide rod 240b are arranged in this order. In the guide rods 240, each guide rod is formed of the resin and is supported by the support surface 202. The guide rod 240 is a member that can be inserted into the guide insertion port 140 provided in the storage battery pack 100, and is higher than the plurality of insertion terminals 210. The guide rod 240 has a cross section having a shape in which a rectangular shape extending in a left-right direction is connected to a rectangular front end extending in a front-rear direction.

With such a shape of the guide rod 240, even when the storage battery pack 100 is erroneously connected to the charging/discharging device 200 in the front-rear direction, the bottom surface 102 and the guide rod 240 come into contact with each other before the bottom surface 102 and the insertion terminal 210 come into contact with each other. At this time, since the opening shape of the guide insertion port 140 is different from the cross-sectional shape of the guide rod 240, the guide rod 240 is not inserted into the guide insertion port 140. Both the bottom surface 102 and the guide rod 240 are formed of the resin. Therefore, deformation of the bottom surface 102 is suppressed.

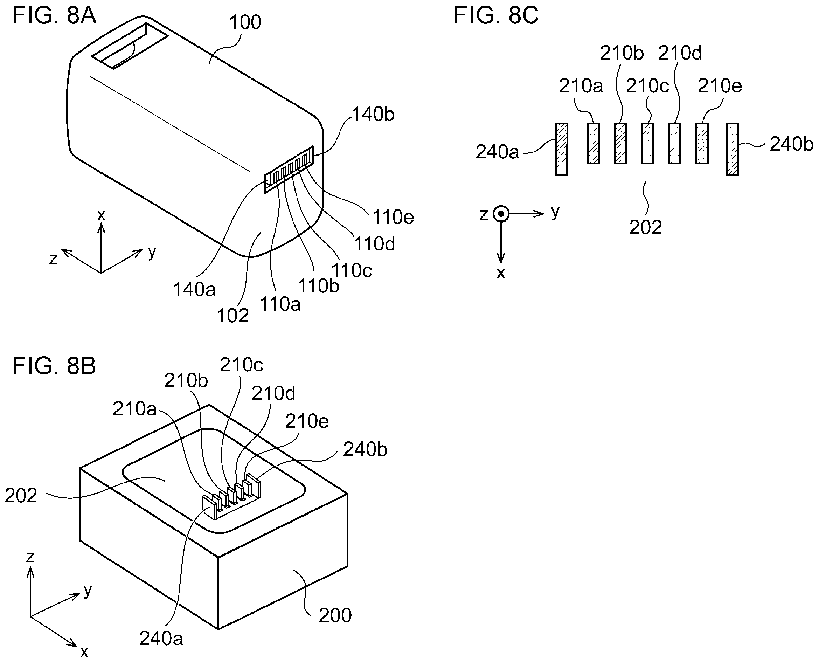

Next, another structure of a charging/discharging system 1000 will be described. Figs. 8A-8C illustrate a structure of another charging/discharging system 1000. Fig. 8A is a perspective view including the bottom surface 102 of the storage battery pack 100, similarly to Fig. 6A. Fig. 8B is a perspective view illustrating a structure of the charging/discharging device 200, similarly to Fig. 7A, and Fig. 8C is a diagram illustrating the support surface 202 as viewed from above, similarly to Fig. 7C. Here, the shape of the guide rod 240 is different from the shape in Figs. 7A-7C. The guide rod 240 has a rectangular cross section extending in the front-rear direction. Further, a rear end of the guide rod 240 is disposed in accordance with a rear end of the insertion terminal 210, but a front end of the guide rod 240 is disposed in front of a front end of the insertion terminal 210. The guide insertion port 140 has a shape into which the guide rod 240 can be inserted.

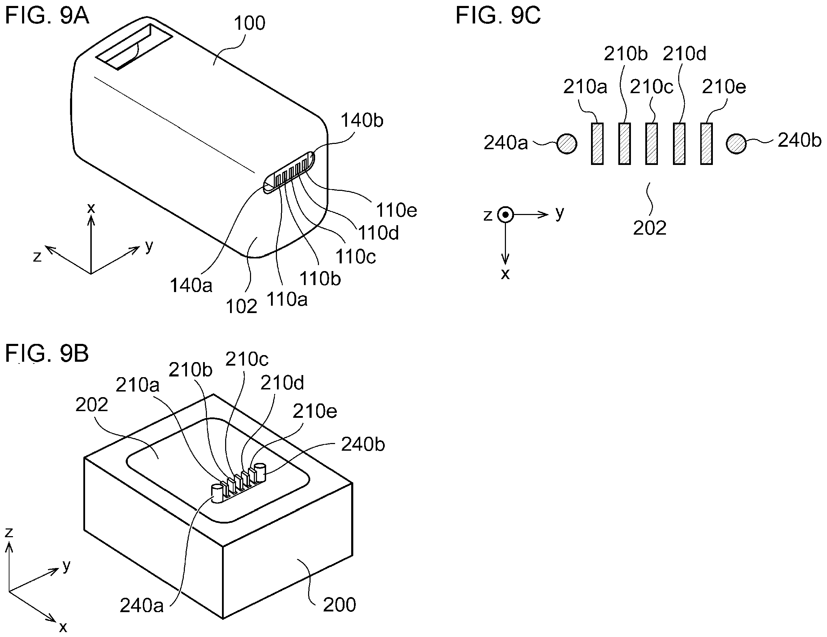

Next, still another structure of the charging/discharging system 1000 will be described. Figs. 9A-9C illustrate a structure of still another charging/discharging system 1000. Fig. 9A is a perspective view including the bottom surface 102 of the storage battery pack 100. Fig. 9B is a perspective view illustrating a structure of the charging/discharging device 200, and Fig. 9C is a diagram illustrating the support surface 202 as viewed from above. These are similar to Figs. 8A-8C. Here, the shape of the guide rod 240 is different from the shapes in Figs. 7A-7C and Figs. 8B-8C. The guide rod 240 has a circular cross section. The guide insertion port 140 has a shape into which the guide rod 240 can be inserted.

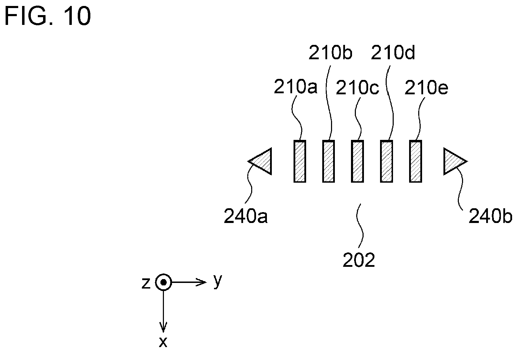

Next, still another structure of the charging/discharging system 1000 will be described. Fig. 10 is a diagram illustrating a structure of a further charging/discharging device. Similarly to Fig. 9C and the like, this is a diagram illustrating the support surface 202 as viewed from above. Here, the shape of the guide rod 240 is different from the previous shapes. The guide rod 240 has a triangular cross section.

According to the present embodiment, since the guide rods 240 higher than the plurality of insertion terminals 210 are disposed on the support surface 202 of the charging/discharging device 200, it is possible to prevent the storage battery pack 100 from being connected in a wrong direction. In addition, since the guide rods 240 higher than the plurality of insertion terminals 210 are disposed on the support surface 202 of the charging/discharging device 200, the storage battery pack 100 can be easily connected. Since the plurality of insertion terminals 210 are formed of the metal and the guide rods 240 are formed of the resin, deformation of the bottom surface 102 of the storage battery pack 100 can be suppressed.

An outline of one aspect of the present disclosure is as follows. Guide rods (240) that can be inserted into guide insertion ports (140) provided in a reception-side device may be further provided, a main body may also support the guide insertion ports (140), and the guide rods (240) may be higher than a plurality of insertion terminals (210).

The plurality of insertion terminals (210) may be formed of a metal, and the guide rods (240) may be formed of a resin.

The present disclosure has been described on the basis of the embodiments. The embodiments are merely examples, and it is understood by those skilled in the art that various modifications can be made in the combination of the respective components or the respective processes, and that the modifications are also within the scope of the present disclosure.

Any combination of the first to third embodiments is also effective. According to the present modification, it is possible to obtain effects of any combination of the first to third embodiments.

In the first to third embodiments, the insertion device is the charging/discharging device 200, and the reception-side device is the storage battery pack 100. However, the present disclosure is not limited thereto, and for example, the insertion device may be a device other than the charging/discharging device 200, and the reception-side device may be a device other than the storage battery pack 100. According to the present modification, an application range of the embodiments can be expanded.

### [INDUSTRIAL APPLICABILITY]

According to the present disclosure, safety in terminals can be improved.

### [REFERENCE SIGNS LIST]

100 storage battery pack, 102 bottom surface, 110 insertion port, 120 contact portion, 130 storage battery, 200 charging/discharging device, 202 support surface, 210 insertion terminal, 300 good conductor, 1000 charging/discharging system

## Claims

1. An insertion device connectable to a reception-side device by insertion, the insertion device comprising:
a plurality of insertion terminals capable of being inserted into a plurality of insertion ports provided in the reception-side device on a one-to-one basis; and
a main body structured to support the plurality of insertion terminals, wherein
the plurality of insertion terminals include
a detection terminal to which a voltage can be applied to detect connection with the reception-side device,
a positive electrode terminal and a negative electrode terminal capable of transmitting power after the connection with the reception-side device, and
a communication terminal capable of transmitting data after the connection with the reception-side device,
the detection terminal is disposed between the positive electrode terminal and the negative electrode terminal,
the communication terminal is disposed between the detection terminal and the negative electrode terminal, and
a size of the detection terminal is smaller than a size of the communication terminal.

2. The insertion device according to claim 1, wherein a width of the detection terminal is smaller than a width of the communication terminal.

3. The insertion device according to claim 1, wherein a height of the detection terminal is lower than a height of the communication terminal.

4. An insertion device connectable to a reception-side device by insertion, the insertion device comprising:
a plurality of insertion terminals capable of being inserted into a plurality of insertion ports provided in the reception-side device on a one-to-one basis; and
a main body structured to support the plurality of insertion terminals, wherein
the plurality of insertion terminals include
a detection terminal to which a voltage can be applied to detect connection with the reception-side device,
a positive electrode terminal and a negative electrode terminal capable of transmitting power after the connection with the reception-side device, and
a communication terminal capable of transmitting data after the connection with the reception-side device,
the detection terminal is disposed between the positive electrode terminal and the negative electrode terminal,
the communication terminal is disposed between the detection terminal and the negative electrode terminal, and
a width of the detection terminal is larger than a width of the negative electrode terminal.

5. The insertion device according to claim 4, wherein a width of the communication terminal is smaller than a width of the detection terminal and larger than a width of the negative electrode terminal.

6. An insertion device connectable to a reception-side device by insertion, the insertion device comprising:
a plurality of insertion terminals capable of being inserted into a plurality of insertion ports provided in the reception-side device on a one-to-one basis; and
a main body structured to support the plurality of insertion terminals, wherein
the plurality of insertion terminals include
a detection terminal to which a voltage can be applied to detect connection with the reception-side device,
a positive electrode terminal and a negative electrode terminal capable of transmitting power after the connection with the reception-side device, and
a communication terminal capable of transmitting data after the connection with the reception-side device, and
a height of the detection terminal is lower than a height of the positive electrode terminal, a height of the negative electrode terminal, and a height of the communication terminal.

7. The insertion device according to any one of claims 1 to 6, further comprising: a guide rod capable of being inserted into a guide insertion port provided in the reception-side device, wherein
the main body supports the guide rod, and
the guide rod is higher than the plurality of insertion terminals.

8. The insertion device according to claim 7, wherein the plurality of insertion terminals are formed of a metal, and
the guide rod is formed of a resin.

9. An insertion system comprising:
a reception-side device including a plurality of insertion ports; and
an insertion device including a plurality of insertion terminals capable of being inserted into the plurality of insertion ports of the reception-side device on a one-to-one basis, wherein
the plurality of insertion terminals include
a detection terminal to which a voltage can be applied to detect connection with the reception-side device,
a positive electrode terminal and a negative electrode terminal capable of transmitting power after the connection with the reception-side device, and
a communication terminal capable of transmitting data after the connection with the reception-side device,
the plurality of insertion ports include
a detection terminal insertion port into which the detection terminal is inserted,
a positive electrode terminal insertion port into which the positive electrode terminal is inserted,
a negative electrode terminal insertion port into which the negative electrode terminal is inserted, and
a communication terminal insertion port into which the communication terminal is inserted,
the reception-side device includes
a detection terminal contact portion capable of coming into contact with the detection terminal inserted into the detection terminal insertion port,
a positive electrode terminal contact portion capable of coming into contact with the positive electrode terminal inserted into the positive electrode terminal insertion port,
a negative electrode terminal contact portion capable of coming into contact with the negative electrode terminal inserted into the negative electrode terminal insertion port, and
a communication terminal contact portion capable of coming into contact with the communication terminal inserted into the communication terminal insertion port, and
a distance between the detection terminal insertion port and the detection terminal contact portion is longer than a distance between the positive electrode terminal insertion port and the positive electrode terminal contact portion, a distance between the negative electrode terminal insertion port and the negative electrode terminal contact portion, and a distance between the communication terminal insertion port and the communication terminal contact portion.
